# EUROPEAN PATENT APPLICATION

(11) **EP 1 346 701 A1**
(43) Date of publication of application: **24.09.2003**
(21) Application number: 01272913.3
(22) Date of filing: 28.12.2001
(51) Int. Cl.: A61C 8/00

(54) **UPPER IMPLANT CONSTRUCTION**

(30) Priority: 28.12.2000 JP 2000404715
(71) Applicant: Obata, Takuro, Tokyo 158-0093 (JP)
(72) Inventor: Obata, Takuro, Tokyo 158-0093 (JP)
(74) Representative: Jacoby, Georg
(86) International application number: JP0111608
(87) International publication number: WO02053054

(57) **Abstract**

The invention provides an implant upper structure that functions to couple a prosthetic crown to a dental implant fixture after embedding the fixture used for the medical treatment in the alveolar bone. The upper structure of the invention is simple and is able to readily and freely have a functional shape that can fit to the arrangement of the row of teeth at an ideal angle depending on the decision of a dentist without burdening a patient with high expenses.

## Description

### Background of the Invention

### Field of the Invention

The invention relates to an implant upper structure (referred to as an upper structure hereinafter) that functions so as to couple a prosthetic crown with a dental implant fixture (referred to as a fixture hereinafter) after embedding the fixture in the alveolar bone.

### Description of the Related Art

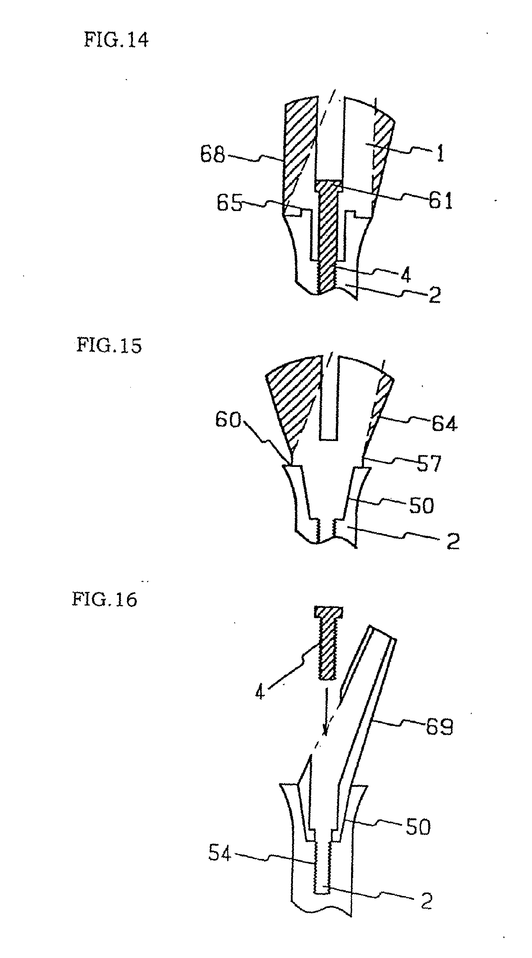

Although conventional angled upper structures have simple shapes, they are previously fixed at an angle of, for example, 15° or 20° to the vertical direction, and are specialized to a shape that can fit to the anterior teeth. Accordingly, the upper structure was impossible to correct for using for the parts other than the anterior teeth due to unavailability of machining even when the row of teeth is shifted from an ideal angle. While Japanese Patent Laid-Open Publication No. 9-234210 discloses a conventional upper structure not requiring to machine, the vertical angle is previously fixed to an intermediate angle between the implant fixture and conventional upper structure so as to have a complex shape that requires a functional part having an apatite function together, and the vertical angle is also fixed. As described in Japanese Patent Laid-Open Publication No. 11-47158, when a so-called angle head that has been conventionally used is used for the molar that receives a occlusal pressure, a screw pin hole is perforated at the center for coupling the so-called angle head to the fixture shown in Fig. 16. However, machining of the angle head for changing the angle is impossible due to a hollow tube structure 69 of the molar, and skilled dentists are anxious about mechanical strength of the angle head when it is independently used for the molar because the entire angle head has the follow tube structure 69. Accordingly, it is no exaggeration to say that there is no angle head that can be reliably used for the molar today.

While the circumference angle of the fixture may be exceptionally modified into hexagonal or octagonal angle in some fixtures, the shape of the angle-head to be used for such fixture cannot be modified since the angle of the angle head is fixed so as to fit in the vertical direction. Such angle head is also designed so as to be coupled with the fixture through the screw pin, and the entire angle head has a hollow tube structure 69 to make the upper structure to have a complex shape. Consequently, the upper structure is forced to have a thin wall, and the mechanical strength is doubtful due to the complex shape while making the upper structure expensive as a result of precise machining required.

The invention relates to an upper structure that enables the row of teeth to be functionally and aesthetically arranged while having a sufficiently compensated mechanical structure, wherein the angle of the upper structure can be adjusted to an ideal angle with a simple structure so that the upper structure is readily fitted to the arrangement of the row of teeth by the judgment of a dentist without applying any complicated precise machining even when either the circumference angle or the vertical angle is changed.

Although conventional fixture has been emphasized how to be embedded in the alveolar bone, and aesthetic sense and occlusal function have not been considered so much in the past, various fixtures having excellent functions have been developed and practically used today to eliminate of the problems of embedding. However, although and aesthetic sense and occlusal function have been further required in recent years, it has been a problem in the dental clinic that the fixture cannot be always inserted into the alveolar bone with an ideal angle.

While the fixture is embedded with an angle to the alveolar bone in the treatment as described above, the bone cannot be sufficiently stabilized unless the fixture is embedded with an angle of the longitudinal axis of the fixture to the alveolar bone in mesiodistal and buccolingual directions. The angle of the upper structure should be adjusted by correcting the angle of the upper structure by machining with an ideal angle fitting to the arrangement of the row of teeth when the fixture is inserted into the alveolar bone with an angle to the alveolar bone. However, there has been no upper structure that is able to be readily machined with respect to the circumference angle and vertical angle.

Bend angles are fixed, or a rotation preventive mechanism with a hexagonal or octagonal depression 63 is provided in the currently available upper structure, so that the upper structure is able to cope with deformation in the circumference angle relative to the arrangement of the row of teeth while being movable so as to generate a maximum deviation of 22.5° to 30°. However, since all the vertical angles are fixed, it is naturally difficult to adjust the angle to an ideal angle to the arrangement of the row of teeth with a fatal drawback that the upper structure is aesthetically and functionally insufficient. Moreover, since the shape of the upper structure is quite complex, it required precise machining to make the upper structure very expensive in addition to problems of the mechanical strength.

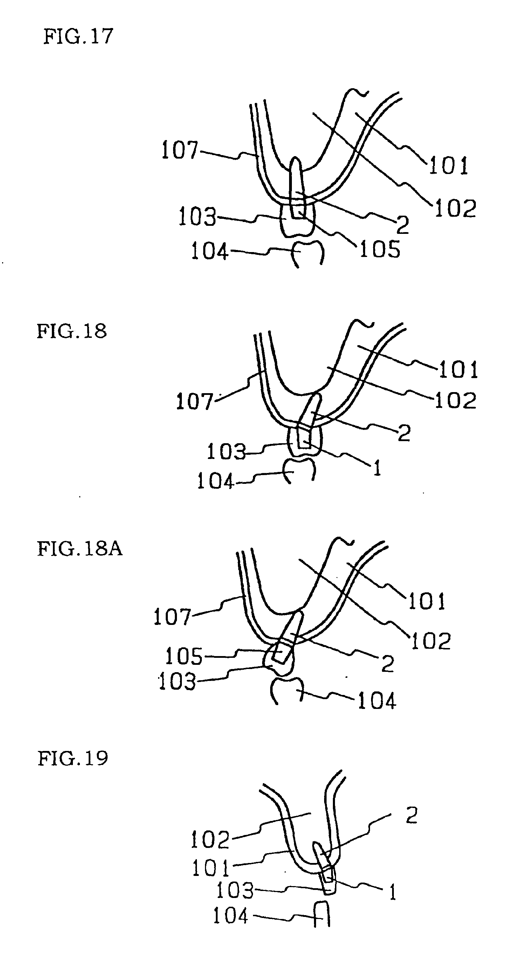

While the fixture is embedded in the front tooth of the upper jaw in an example of the conventional art as shown in Fig. 19, the front teeth of the upper jaw cannot be embedded at an ideal angle in most cases. As shown in Fig. 17, the maxillary sinus 102 is large in the molar of the upper jaw, and the bone is so thin for embedding the fixture at an ideal angle to the pairing tooth that a part of the fixture is penetrated into the maxillary sinus. Consequently, embedding of the fixture frequently becomes impossible. However, sufficient volume of the alveolar bone is obtained by embedding the fixture with an angle of the longitudinal axis of the fixture to the palatine bone side as shown in Fog. 18, and the fixture is supported by alveolar bone to increase the fixing strength of the fixture.

Penetration of a part of the fixture into the maxillary sinus is dangerous because the penetrated part is liable to be infected with bacteria and the ginvia may cause inflammation.

When the fixture is embedded with an angle to the alveolar bone in order to secure a fixing strength of the fixture by the alveolar bone, the conventional upper structure cannot be fixed with an ideal angle to the arrangement of the roe of teeth. Instead, the prosthetic crown cannot meet the pairing tooth as shown in Fig. 18-A, thereby failing in obtaining functionality and aesthetic appearance.

Various straight upper structures are commercially available today. However, the upper structure becomes smaller and sharp when the upper structure is machined to have an ideal angle since its shape and angle are previously determined. As a result, the bonding area between the upper structure and prosthetic crown is so reduced that bonding strength with a cement is weakened, and the upper structure cannot be corrected in many cases even when the shape is different from ideal ones.

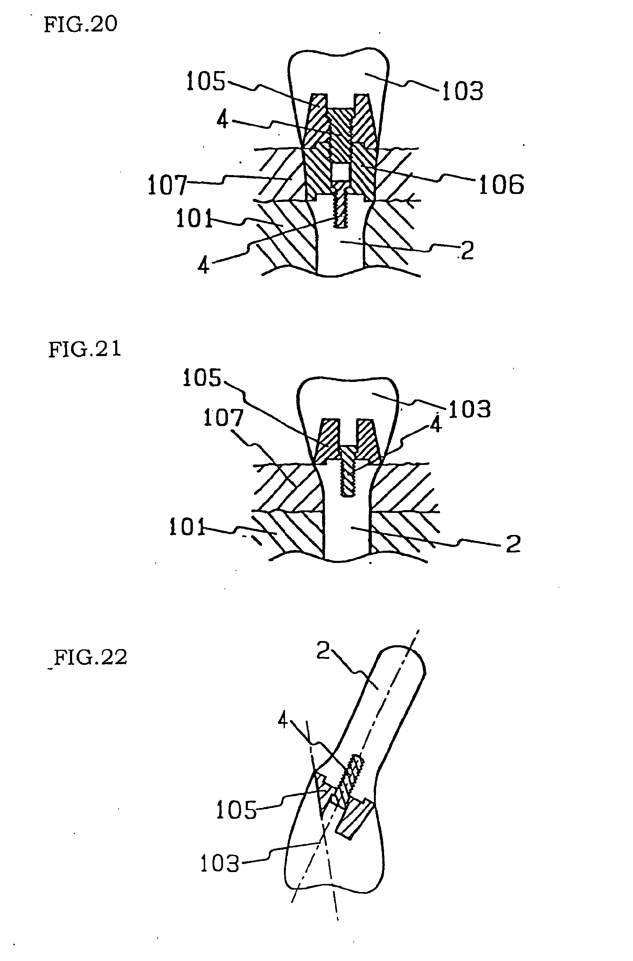

The fixture may not be angled and may be embedded with an angle fitting the arrangement of the row of teeth. However, the fixture cannot be always embedded with an ideal angle irrespective of the skill of the dentist. While the angle of the upper structure is required to be arbitrarily adjusted in this case, the conventional straight upper structure 105 is often directly used considering the cost and mechanical strength when the upper structure has little margin for angle adjustment. The dentist directly uses the conventional straight upper structure 105 at the expense of the ideal arrangement of the row of teeth, or the tip of the upper structure is machined to fit the arrangement of the roe of teeth in order to change the angle of the straight upper structure 105. However, the tip of the upper structure becomes so slender by this machining as shown in Fig. 22 that the bonding strength between the prosthetic crown and upper structure with the cement is weakened. Accordingly, the dentist uses such upper structure with some confusion.

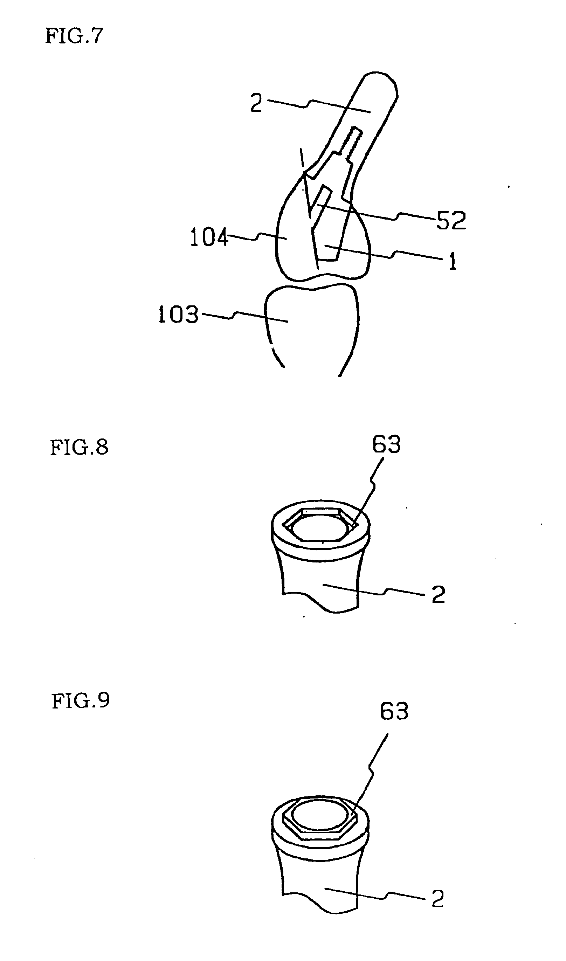

An angled upper structure, or a so-called angle head as shown in Fig. 16, is commercially available. A hexagonal or octagonal protrusion or depression 63 as a rotation preventive mechanism is provided on the upper structure so as to fit the depression or protrusion of the fixture having the same shape as shown in Figs. 8 and 9. However, a maximum angular difference of 22.5° to 30° from the ideal angle is caused in the direction of the circumference angle. Furthermore, correction of the vertical angle is impossible since it is previously determined. Therefore, it is a fatal defect that the angle is shifted from the ideal angle. A screw pin-hole is perforated at the center of the upper structure in order to couple the so-called angle head to the fixture, and the entire upper structure becomes a slender hollow pipe 69. Consequently, correction of the shape is almost impossible. The dentist usually considers that the conventional so-called angle head alone cannot be used for the molar due to its poor mechanical strength, and that at least a plurality of the angle heads should be basically used, if necessary. The structure is quite expensive for such precise machining, and patients are forced to pay high medical expenses.

The object of the invention is to provide an upper structure having a simple structure without burdening a patient with high expenses, wherein the upper structure is possible to be fitted with an ideal angle to the arrangement of the row of teeth depending on the dentist's own decision while enabling the upper structure to be freely functioned.

### Summary of the Invention

The constitution of the upper structure according to the invention will be described hereinafter with reference to the drawing.

The fit-in protrusion 50 of the implant upper structure 1 fits the fit-in depression 53 of the fixture 2, and the external thread 51 provided at the upper structure 1 fits the internal thread 54 of the fixture 2. The external thread 51 of the upper structure 1 and the internal thread 54 of the fixture 2 are coupled with each other by screwing, and a reversed cone is provided at the upper part of the fit-in protrusion 50 of the upper structure 1 with an angle α in the range of 1° to 35° and a length H in the range of 3mm to 8 mm starting from the upper circumference 56 of the fixture 2.

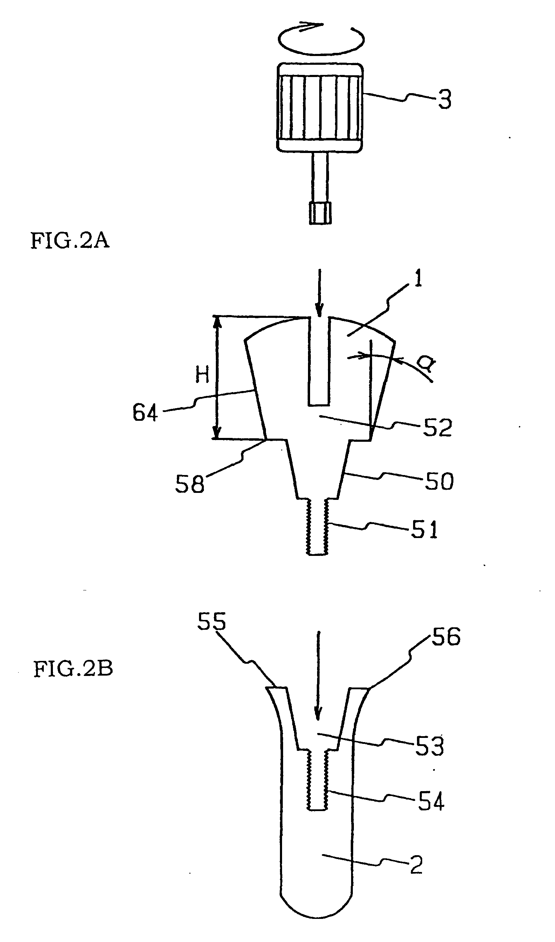

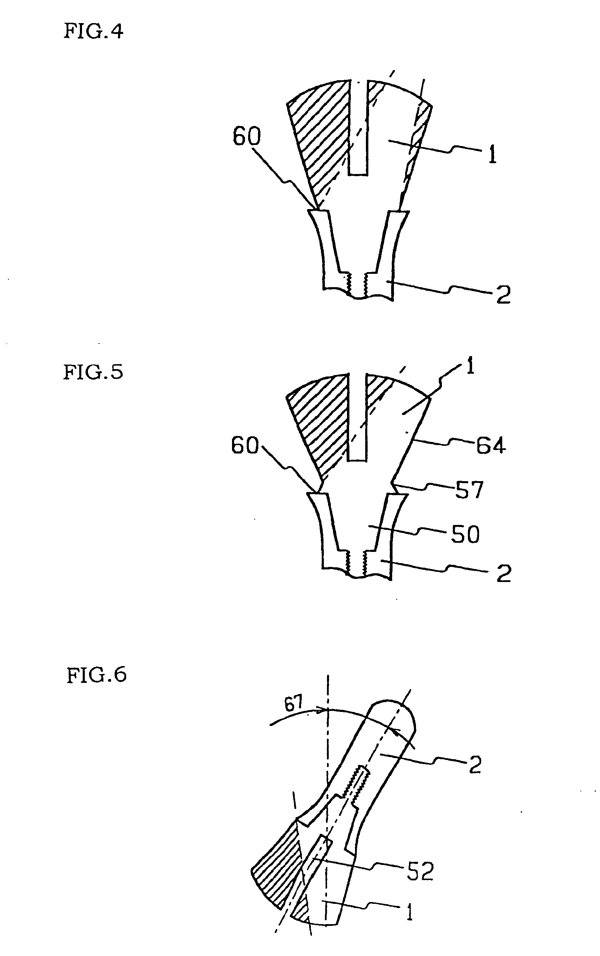

A screw-tight wrench part 52 for fixing the upper structure 1 by being coupled with the fixture 2 is provided at the upper part of the reversed cone of the upper structure 1 as shown in Fig. 2A, so that the upper structure 1 is not extinguished by machining at an arbitrary ideal angle to fit the oblique line part of the upper structure 1 to the arrangement of the roe of teeth, when the fixture 2 in Fig. 2B is embedded in the alveolus bone 101 with an arbitrary inclined angel 67 as shown in Fig. 6.

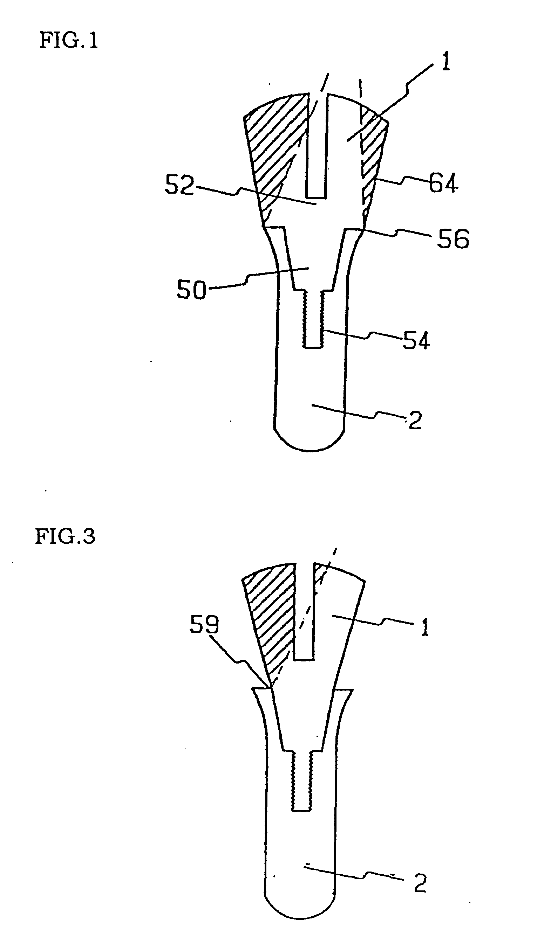

Machining of the implant upper structure 1 into an ideal final shape suitable for various dental treatments is enabled by setting an initiation point 58 of the implant upper structure 1 at an arbitrary diameter such as an intermediate diameter on the upper circumference surface 55 of the implant fixture 2, at an upper inner circumference 59 of the implant fixture 2, at an outer circumference 56 of the implant fixture as shown in Fig. 1, or at an intermediate point 60 in Fig. 4 between the outer circumference 56 in Fig. 1 and inner circumference 59 in Fig. 3 of the implant fixture.

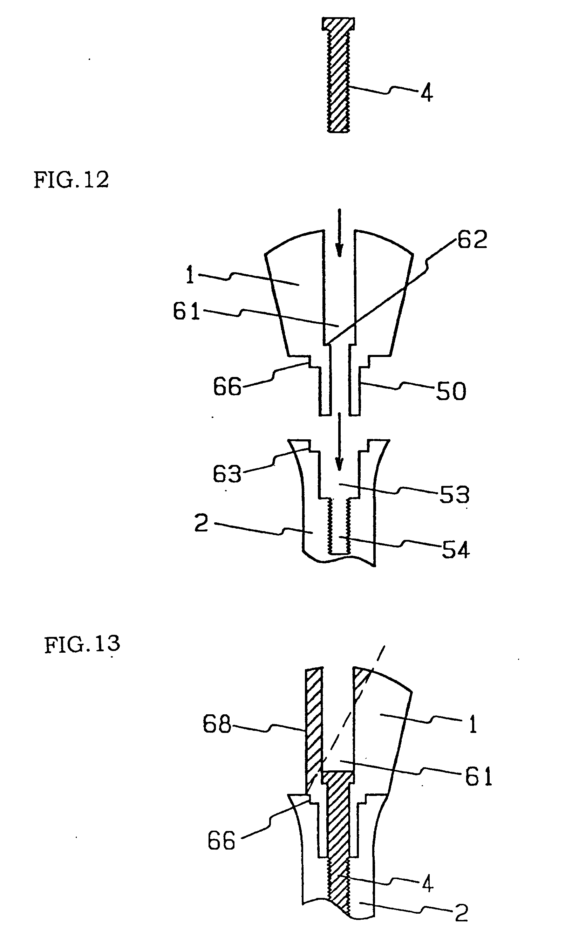

When the implant structure 1 is coupled with a conventional implant fixture 1 having hexagonal or octagonal depressed or protruded rotation preventive mechanism 63 at the upper part of the implant fixture 2, a through hole 61 is provided from the upper part of the reversed cone of the implant structure 1 as shown in Fig. 12 so as to provide a step 62 for stopping the head 4 of a screw pin at an intermediate height instead of providing an attachment and detachment wrench part 52 and screw part 51 in the implant upper structure 1 as shown in Fig. 2A. The implant upper structure 1 is fixed by being coupled with the implant fixture 2 with the screw pin 4.

When the implant structure 1 is coupled with the implant fixture 2 having hexagonal or octagonal depressed or protruded rotation preventive mechanism 63 as described above, the hexagonal or octagonal depressed or protruded rotation preventive mechanism 63 is eliminated at the inner circumference of the rotation preventive mechanism having an internal hexagonal depression as shown in Fig. 8, or at the outer circumference of the rotation preventive mechanism having an external hexagonal protrusion as shown in Fig. 9, thereby permitting the implant upper structure to freely rotate in the circumference direction to attain the same condition as described above.

A part of the outer circumference surface 64 of the reversed cone provided at the upper part of the fit-in protrusion 50 of the implant upper structure 1 is depressed as shown in Fig. 5 or 15, in place of the straight outer circumference surface of the reversed cone as shown in Fig. 1 or 3.

### Brief Description of the Drawings

Fig. 1 illustrates a basic constitution of the use of the upper structure and fixture according to the invention;
Fig. 2A illustrates a disassembled drawing of the basic constitution of use in Fig. 1 in the upper structure according to the invention;
Fig. 2B illustrates a disassembled drawing of the basic constitution of use in the conventional fixture;
Fig. 3 shows an example of a variation of the shape of the upper structure according to the invention, and the machining part (shown by oblique lines) of the upper structure;
Fig. 4 is a comparative example showing a variation of the shape of the upper structure according to the invention, and the machining part (shown by oblique lines) of the upper structure;
Fig. 5 is a comparative example showing a variation of the shape of the upper structure according to the invention, and the machining part (shown by oblique lines) of the upper structure;
Fig. 6 illustrates an example of the upper structure of the invention embedded in the molar of the upper jaw with an angle;
Fig. 7 illustrates an example of the upper structure of the invention embedded in the molar of the upper jaw with an angle;
Fig. 8 illustrates a conventional fixture provided with an internally depressed hexagonal rotation preventive function at the top thereof;
Fig. 9 illustrates a conventional fixture provided with an externally protruded hexagonal rotation preventive function at the top thereof;
Fig. 10 illustrates the upper structure of the invention using the fixture provided with an internally depressed hexagonal rotation preventive function shown in Fig. 8, and shows an example of use as shown in Fig. 14;
Fig. 11 illustrates the upper structure of the invention using the fixture provided with an externally protruded hexagonal rotation preventive function shown in Fig. 9, and shows an example of use as shown in Fig. 12;
Fig. 12 shows a disassembled drawing of the upper structure of the invention having a through hole from the upper part in order to couple the upper structure with the fixture using a screw pin;
Fig. 13 shows an example of a part of the upper structure of the invention previously subjected to machining;
Fig. 14 shows an example of a part of the upper structure of the invention previously subjected to machining;
Fig. 15 shows a comparative example showing a variation of the shape of the upper structure according to the invention, and a machining part (shown by oblique lines) of the upper structure;
Fig. 16 illustrates an example of the conventional so-called angle head having a perforated screw pin hole at the center of the fixture for coupling the angle head with the fixture, wherein the entire shape of the angle head is a slender pipe;
Fig. 17 illustrates an example in which a fixture having a sufficient length is embedded in the molar of the upper jaw with no angle;
Fig. 18 illustrates the use of the upper structure of the invention when a fixture having a sufficient length is embedded in the molar of the upper jaw with an angle;
Fig. 18A illustrates the use of the conventional straight upper structure when a fixture is embedded in the molar of the upper jaw with an angle;
Fig. 19 illustrates the use of the upper structure of the invention to the front tooth of the upper jaw;
Fig. 20 illustrates a triple piece method;
Fig. 21 illustrates a two piece method; and
Fig. 22 illustrates the use of the conventional upper structure corrected by machining to fit the arrangement of the row of teeth and used for the molar of the upper jaw.

### Description of the Preferred Embodiments

The constitution of an upper structure 1 according to the invention will be described with reference to Figs. 1 to 22.

In the embodiments of the present invention, the upper structure 1 is used when a fixture 2 is embedded in the alveolar bone 101 of the front tooth or molar of the upper jaw.

Fig. 1 shows a basic construction of the use of the upper structure 1 and fixture 2. Figs. 2A and 2B show disassembled constructions of the basic construction of the use in Fig. 1. Fig. 2A shows the basic construction o the upper structure 1, and Fig. 2B shows the basic structure of the fixture 2. In Fig, 2A, the fit-in protrusion 50 of the upper structure 1 is fitted to a fit-in depression 53 of the fixture 2, and an external thread 51 provided at the upper structure 1 is screwed into an internal thread 54 of the fixture 2. The external thread 51 of the upper structure 1 and the internal thread 54 of the fixture 2 is coupled and fixed with a rotary screw stopper. A reversed cone is provided at the upper part of the fit-in protrusion 50 of the upper structure 1 with an angle α in the range of 1° to 35° and with length H in the range of 3mm to 8 mm starting from the upper circumference 56 of the fixture 2. A screw tightening wrench tool 3 is inserted into a wrench 52 for fixing the upper structure 1 into the fixture 2, and the upper structure 1 is coupled by screwing into the fixture 2.

When the fixture 2 is embedded in the front tooth of the upper jaw, it is difficult to embed the fixture 2 at an ideal angle since the alveolus bone 101 is too thin for embedding the fixture 2 with an ideal angle to the pairing tooth 104. However, embedding the fixture with an angle of the longitudinal axis of the fixture 2 in the direction of the palate is possible as shown in Fig. 6 provided that a sufficient mass of the bone could be ensured at the palate side of the alveolus bone 101 of the front tooth of the jaw. However, the oblique line portion of the upper structure 1 should be adjusted at an arbitrary angle 67 by machining corresponding to angled embedding so as to fit the arrangement of the row of teeth. The invention is featured in that the oblique line portion is corrected by cutting, and the upper structure is enabled to be machined at an arbitrary ideal angle in the circumference angle direction and vertical angle direction. An example in which the upper structure is embedded in the molar of the upper jaw with an angle is shown in Fig. 7.

Embedding the fixture 2 with an angle in the direction of the palate side enables the fixture 2 to be embedded with a longer distance as shown in Fig. 18. Consequently, a sufficient fixing strength of the fixture 2 is obtained by being sufficiently supported with the alveolus bone 101. Therefore, the use of the upper structure 1 in this case can exert a quite large effect without compromising the function and aesthetic appearance, because machining of the upper structure with an ideal angle is possible so that the upper structure fits the arrangement of the roe of teeth at an arbitrary angle to the circumference angle and vertical angle.

The upper structure 1 is a reversed conical shape in the upper direction from the contact surface with the upper circumference surface 55 of the fixture 2, or from the starting point 58 of the outer periphery of the cone as shown in Fig. 2A, and is a reversed cone having the same diameter as the inner diameter 59 on the upper circumference surface 55 of the fixture 2 as shown in Fig. 3. Or, the upper structure is a reversed come having the same diameter as the outer circumference 56 on the upper circumference surface 55 of the fixture 2 as shown in Fig. 1. Alternatively, the upper structure is provided as a reversed cone on the fixture by arbitrarily setting at an intermediate diameter 60 between the inner circumference diameter 59 and outer circumference diameter 56 of the upper circumference surface 55 of the fixture 2 as shown in Fig. 4. Consequently, the upper structure 1 can be machined into ideal shapes so as to fit various dental treatments.

When the upper structure 1 is machined at the dental laboratory by fixing it on a model fixture 2, the oblique line part of the reversed conical shape of the upper structure 1 is machined up to the upper circumference surface 55 of the fixture to be as close as possible as shown in Figs. 1, 3, 4, 13 and 14. However, the upper circumference surface 55 of the fixture 2 is often damaged by machining above. For solving the problem, the outer circumference surface 64 of the reversed cone provided in the upper direction of the fit-in part 50 of the upper structure 1 and having an angle in the range of 1° to 35° as shown in Fig. 1 is not formed as a reversed cone having a straight outer surface as shown in Fig. 1. Instead, the outer surface of the reversed cone is previously deformed to be a partly concave surface 57 as shown in Figs 5 and 15. The upper structure is machined at the upper part of the concave portion 57 previously provided as shown by the oblique lines in Figs. 5 and 15, instead of machining the upper structure 1 up to the upper circumference surface 55 of the fixture 2 to be as close as possible. As a result, the upper circumference surface 55 of the fixture 2 is prevented from being damaged, and sacrificing the commercial value of the fixture 2 as an expensive part can be avoided.

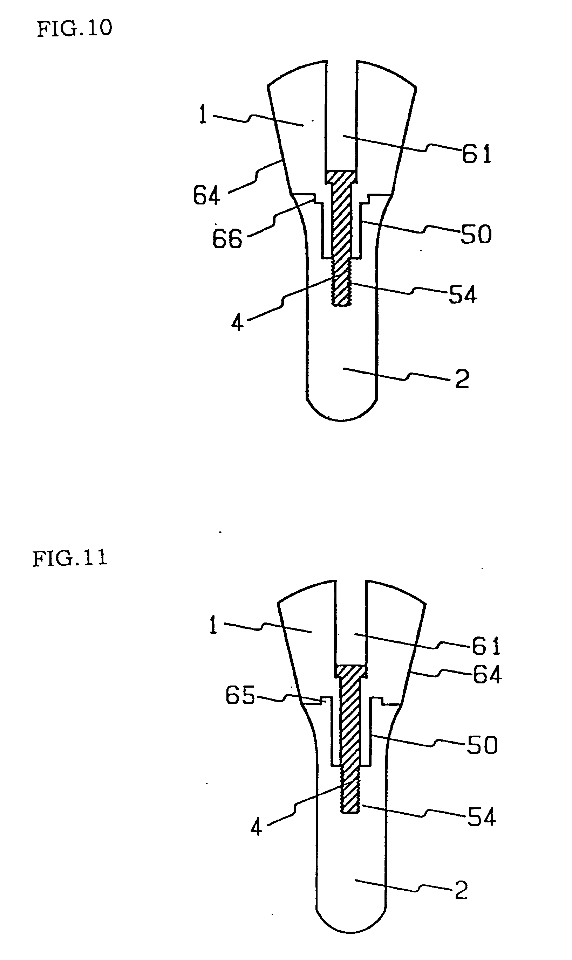

When the conventional upper structure is coupled with the implant fixture 2 having a depressed hexagonal or octagonal rotation preventive mechanism 63, a through hole 61 having a step 62 that can stop the head of a threaded-pin 4 at the halfway is provided from the upper part of the reversed cone of the upper structure to the threaded part 51 of the fit-in protrusion 50 as shown in Fig. 12 without providing a wrench part 52 and threaded part 51 of the upper structure as shown in Fig. 2A. The threaded part 54 of the fixture 2 is tightened with the screw pin to fix the upper structure 1 by coupling with the fixture 2 as shown in Figs. 10, 11, 13 and 14. Although this upper structure has some drawback that the mechanical structure is a little decreased as in the so-called conventional angle head being a slender hollow pipe as shown in Fig. 16, as compared with the upper structure 1 integrated with the threaded part 51 as shown in Fig. 2A.

The fixture is roughly divided into two classes. The upper structure 1 of the invention as shown in Fig. 1 is used in one class of the fixture. The fixture 2 and the upper structure 1 have no hexagonal or octagonal depression and protrusion, respectively, as the rotation preventive mechanism, and the upper structure is fixed by being couples with the fixture 2 with the threaded part 51 of the upper structure 1. In another class, as shown in Fig. 8 and 9, the hexagonal or octagonal depression 63 as the rotation preventive mechanism is provided at the upper part of the fixture 2, and the upper structure as the so-called angle head is provided with the hexagonal or octagonal fit-in protrusion so that the protrusion is fitted into the hexagonal or octagonal depression 63 at the upper part of the fixture 2, and the upper structure is fixed by being coupled with the fixture using a screw pin. There arises no practical problems by using the upper structure 1 of the invention for the fixture 2 having the hexagonal or octagonal depression 63 as the rotation preventive mechanism, when a hexagonal or octagonal relief 65 as shown in Fig. 11, or a hexagonal or octagonal fit-in part 66 as shown in Fig. 10 or 12, is provided so that the upper structure can be fitted by being accommodated with the hexagonal or octagonal depression 63 at the upper part of the fixture 2. While it is a drawback of using such fixture 2 that the circumference angle of the upper structure 1 is naturally fixed, a cut-off part 68 is previously provided at one side of the outer circumference of the upper structure 1 as shown in Figs. 13 and 14 for obtaining the same effect even when the angle is fixed, in order to save the machining time at the dental laboratory.

The method for embedding the fixture 2 comprises a two piece method in which the upper part of the fixture 2 is allowed to stay in the vicinity of the gingiva 107 as shown in Fig. 21, and the prosthetic crown 103 is set thereon with interposition of the conventional fixture 105, and a three piece method in which the fixture 2 is embedded to be almost flush with the alveolar bone 101 as shown in Fig. 20, and an abutment 106 and conventional upper structure 105 is allowed to interpose between the fixture and prosthetic crown 103. In the similar method to the two piece method, the conventional upper structure 105 is set to the fixture 2 that has been described above, and the abutment 106 is coupled to the fixture 2, while the conventional upper structure 105 is coupled with the combination of the fixture 2 an abutment 106 in the three piece method. The same concept as in the two piece method is attained by integrating the abutment 106 with the upper structure, which makes the abutment 106 required in the three piece method is not needed, and the upper structure 1 of the invention is able to cope with this concept. Therefore, the upper structure 1 of the invention may be used by being replaced in the concepts of both two piece method and three piece method, and can afford a universal effect for various mode of the dental treatment.

According to the descriptions of the invention, the dental fixture 2 may be embedded in the alveolar bone 101 irrespective of the shape of the upper structure having a fixed angle. The upper structure can be easily machined in any arbitrary angles of the circumference angle and vertical angle so as to fit the embedding angle of the fixture 2 depending on the decision of the dentist. An ideal and aesthetic arrangement of the row of teeth may be formed when the upper structure 1 is set to the fixture 2.

The upper structure 1 of the invention after machining with respect to the ideal arrangement of the row of teeth is completely superior to the commercially available upper structure with a fixed angle, the so-called angle head and other commercially available products that are able to modify only in the circumference angle direction with a certain degree of deviation, or the upper structure molded by a casting method that requires a manufacturing time and cost, even though the upper structure of the invention requires a time for machining at the initial stage for machining the upper structure 1 of the invention at the initial stage in the dental clinic.

The difference between the conventional product and the product of the invention is in that the final configuration of use should be processed by the dentist without using a completed product. It may require a too much time for processing in the oral cavity, and the level of completeness may be different depending on the experience and skill of the dentist. For solving this problem, the upper structure and the fixture is once set in the oral cavity by taking advantage of the nature of the upper structure and fixture of the invention that, when the upper structure 1 of the invention is screwed into the fixture 2, they always return to the original installation site even after repeated number of screwing operations. The combined upper structure and fixture is molded in the oral cavity, and transferred to a model at outside of the oral cavity to machine the upper structure in the dental laboratory. As a result, the more complete upper structure 1 than processed in the oral cavity may be finished to enable completeness of the upper structure to be stabilized. Since this processing method at the outside of the oral cavity is able to largely reduce the machining time in the oral cavity, anxiety and pain of the patient can be largely alleviated, and the dentist is able to cope with various mode of dental treatments with no hesitation, thereby exerting a quite large effect in the dental clinic.

Since the commercially available upper structure has been supplied to the dentist as an almost completed product, it is a basic concept that no post-processing such as machining is not naturally required in the dental treatment. However, it is a problem that the mechanical strength of the upper structure and bonding strength of the prosthetic crown may be decreased when the fixture is inserted into the alveolar bone at an angle not fitting to the arrangement of the row of teeth, inevitably arising the need of machining of the upper structure so as to fit the arrangement of the row of teeth. The invention is featured in that the upper structure is supplied to the dentist so as to be able to be corrected by machining so that the upper structure is readily fitted to the arrangement of the row of teeth, more functional and aesthetic arrangement of the row of teeth is more easily obtained depending on the decision of the dentist, and the upper structure is commonly applicable to various mode of dental treatments.

The invention permits the upper structure having a simple structure to be provided without burdening the patient with high expenses while enabling the upper structure to be readily and freely functioned at an ideal angle fitting to the arrangement of the row of teeth depending on the decision of the dentist.

## Claims

1. An implant upper structure (1) having a fit-in protrusion (50) that fits a fit-in depression (53) of an implant fixture (2), an external thread (51) provided at the implant upper structure being screwed into an internal thread (54) of the implant fixture (2),
the external thread (51)of the implant upper structure (1) and the internal thread (54) of the implant fixture (2) being able to be coupled with each other by being screwed, and
a reversed cone being provided, in the upper direction, at the upper part of the fit-in protrusion (50) of the implant upper structure (1) at an angle α in the range of 1° to 35° and with a length H in the range of 3 mm to 8 mm using the upper outer circumference (56) of the implant fixture (2) as an initiation point.

2. The implant upper structure according to Claim 1, wherein a screw-tight wrench part (52) is provided at the upper part of the reversed cone of the implant upper structure (1) so that the implant upper structure (1) is fixed by being coupled with the implant fixture (2) at a depth that does not extinguish the implant fixture (2) even by machining an inclined line part of the implant upper structure (1) at an arbitrary ideal angle to fit the arrangement of the row of teeth, when the implant fixture (2) is inserted into the alveolar bone with an arbitrary inclined angle (67).

3. The implant upper structure according to Claim 1, wherein machining of the implant upper structure into an ideal final shape suitable for various dental treatments is enabled by setting an initiation point (58) of the implant upper structure (1) at an arbitrary diameter such as an upper inner circumference diameter (59), an outer circumference diameter (56) or an intermediate diameter at an intermediate point between the outer circumference (56) and inner circumference (59) of the implant fixture (2), or the upper circumference surface of the implant fixture (2).

4. The implant structure according to Claim 1 wherein, when the implant structure is coupled with an implant fixture (1) having hexagonal or octagonal (63) depressed or protruded rotation preventive mechanism at the upper part of the implant fixture (2), a through hole (61) is provided from the upper part of the reversed cone of the implant upper structure (1) so as to provide a step (62) for stopping the head of a screw pin (4) at an intermediate height instead of providing an attachment and detachment wrench part (52) and screw part (51) in the implant upper structure (1),
the implant upper structure (1) being fixed by being coupled with the implant fixture (2) with the screw pin (4).

5. The implant upper structure according to Claim 4 wherein, when the implant upper structure (1) is coupled with the implant fixture (2) having hexagonal or octagonal (63) depressed or protruded rotation preventive mechanism, the hexagonal or octagonal (63) depressed or protruded rotation preventive mechanism is eliminated at the inner circumference of the rotation preventive mechanism having an internal hexagonal depression, or at the outer circumference of the rotation preventive mechanism having an external hexagonal protrusion, thereby permitting the implant upper structure to freely rotate in the circumference direction to attain the same condition as in Claim 1.

6. The implant upper structure according to Claim 1, wherein a part of the outer circumference surface (64) of the reversed cone provided at the upper part of the fit-in protrusion (50) of the implant upper structure (1) is depressed in place of the straight outer circumference surface of the reversed cone.
